Europäisches Patentamt

European Patent Office

Office européen des brevets

(19)

(11) EP 0 936 196 B1

(12) **FASCICULE DE BREVET EUROPEEN**

(45) Date de publication et mention
de la délivrance du brevet:
**16.04.2003 Bulletin 2003/16**

(51) Int Cl.⁷: **C03C 3/087**, C03C 4/08

(21) Numéro de dépôt: **99400321.8**

(22) Date de dépôt: **11.02.1999**

(54) **Compositions de verre de type silico-sodo-calcique**

Kalknatron-Silikatglaszusammensetzungen

Soda-lime-silica glass compositions

(84) Etats contractants désignés:
**BE DE ES FR GB IT LU NL PT SE**

(30) Priorité: **11.02.1998 FR 9801592**

(43) Date de publication de la demande:
**18.08.1999 Bulletin 1999/33**

(73) Titulaire: **SAINT-GOBAIN GLASS FRANCE
92400 Courbevoie (FR)**

(72) Inventeur: **Berthereau, Anne
75011 Paris (FR)**

(74) Mandataire: **Renous Chan, Véronique et al
Saint-Gobain Recherche,
39, Quai Lucien Lefranc
93300 Aubervilliers (FR)**

(56) Documents cités:
WO-A-94/25407          DE-A- 3 534 575
DE-A- 4 231 794        DE-C- 915 024
FR-A- 916 081          GB-A- 2 165 231

## Description

L'invention concerne de nouvelles compositions verrières de type silico-sodo-calcique destinées à la production de verres plats, bouteilles, ou flaconnages. Bien que l'invention ne soit pas limitée à une telle application, elle sera plus particulièrement décrite en référence à des applications pour l'automobile.

Les vitrages destinés à l'industrie automobile sont soumis à différentes exigences, notamment en ce qui concerne leurs propriétés optiques ; ces exigences sont régies par voie de réglementation, par exemple lorsqu'il s'agit de la transmission lumineuse d'un pare-brise ou bien par souci du confort de l'usager, par exemple en ce qui concerne la transmission énergétique ou bien encore par souci d'esthétisme, notamment en ce qui concerne la couleur.

Par ailleurs, depuis quelques temps, les constructeurs s'orientent vers une nouvelle exigence concernant la transmission des ultraviolets. Cette nouvelle tendance a notamment pour but une volonté de protéger au mieux la peau du soleil en évitant le bronzage et les coups de soleil. Un autre but de cette tendance est de limiter le fanage des tissus qui habillent l'intérieur des véhicules automobiles.

Il est connu que le fer, sous sa forme d'ions ferriques $Fe^{3-}$, c'est-à-dire sous la forme $Fe_2O_3$ permet d'obtenir une absorption dans l'ultraviolet. Il est par ailleurs connu que le fer, sous sa forme d'ions ferreux $Fe^{2+}$, c'est-à-dire sous la forme $FeO$, permet d'obtenir une absorption dans l'infrarouge et donc une absorption énergétique.

Il est ainsi connu que la régulation du rédox (coefficient d'oxydo-réduction) d'une composition de verre permet de réguler l'absorption dans l'ultraviolet par rapport à celle dans l'infrarouge en ce qui concerne l'action du fer.

Il a par ailleurs déjà été décrit, notamment dans la demande de brevet WO94/14716 que l'oxyde de cérium $CeO_2$ a un effet sur l'absorption dans l'ultraviolet. Toutefois, l'introduction de cet oxyde conduit à un surcoût de la composition très important du fait du coût des matières premières permettant l'introduction de cet oxyde.

Il a également déjà été décrit, notamment dans les brevets US-5 478 783 et WO-A-94/25407 que l'oxyde de titane $TiO_2$ a aussi un effet sur l'absorption dans l'ultraviolet. Si le coût de l'introduction de $TiO_2$ dans une matrice verrière est inférieur à celle de $CeO_2$, il reste tout de même très élevé.

Il est encore connu notamment du document WO94/14716 de combiner les deux oxydes $CeO_2$ et $TiO_2$, toujours dans le but d'une meilleure absorption dans l'ultraviolet. Une telle combinaison ne permet bien entendu pas de limiter le surcoût dû à l'introduction de ces oxydes dans une matrice verrière.

Il est également connu de DE-C-915 024 d'ajouter du $TiO_2$ ou du $WO_3$ pour augmenter l'absorption dans l'infrarouge de compositions de verre réduits, c'est-à-dire contenant 0,11 à 0,20% de $FeO$ et une très faible quantité de $Fe_2O_3$.

Les inventeurs se sont ainsi donnés pour mission, la conception de compositions de verre de type silico-sodo-calcique possèdant une absorption renforcée dans l'ultraviolet avec un surcoût de production inférieur à ceux entraînés par les techniques évoquées précédemment.

Ce but a été atteint selon l'invention par une composition de verre de type silico-sodo-calcique présentant une transmission dans l'ultraviolet telle que $T_{U.V.\ ISO}$ soit inférieure à 15%, et de préférence inférieure à 13% pour une épaisseur de feuille de verre comprise entre 2,85 mm et 4,85 mm, et notamment égale à 3,85 mm et comportant les oxydes ci-après dans les limites pondérales suivantes :

| | |
|---|---|
| $Fe_2O_3$ | 0,4 - 1,5 % |
| $WO_3$ | 0,1 - 1,2% |
| où $Fe_2O_3$ est le fer total | |

La teneur en oxyde $Fe_2O_3$ est avantageusement telle que :

$$0,8\ \% \leq Fe_2O_3 \leq 1,3\ \%$$

De préférence, la composition de verre présente une $T_{U.V.\ ISO}$ inférieure à 10% pour une épaisseur de verre comprise entre 2,85 mm et 4,85 mm, et de préférence comprise entre 3 et 4 mm.

Il est en effet apparu que la présence simultanée des deux oxydes $Fe_2O_3$ et $WO_3$ conduit à une amélioration de l'absorption dans l'ultraviolet des compositions de verre de type silico-sodo-calcique. Les résultats obtenus en ce qui concerne la transmission ultraviolette sont tout-à-fait comparables à ceux obtenus avec les techniques faisant intervenir l'oxyde $TiO_2$. Par contre, les coûts de production de la composition selon l'invention sont nettement inférieurs à ceux des techniques antérieures, notamment du fait des coûts des matières premières.

Les matières premières porteuses de $WO_3$ peuvent être de différentes natures ; il peut s'agir par exemple de $WO_3$ pur, de wolfram jaune ou bleu qui contient 98,5% de $WO_3$. De façon à diminuer encore les coûts de production, les matières premières porteuses de $WO_3$ peuvent être des minerais, tels que la scheelite, constituée principalement de $CaWO_4$ ou la wolframite, constituée principalement de Fe, Mn $(WO_3)$.

Selon une réalisation préférée de l'invention, la transmission énergétique globale $T_E$, est inférieure à 50%, et de préférence inférieure à 45% pour une épaisseur de 3,85 mm. De telles exigences correspondent notamment à celles requises pour les applications automobiles pour assurer le confort des personnes se trouvant au sein de l'habitacle. De préférence encore, le rédox, c'est-à-dire le rapport $FeO/Fe_2O_3$ est compris entre 0,12 et 0,29 et de préférence entre 0,15 et 0,26.

Selon une première variante de réalisation et plus particulièrement pour des applications automobiles telles que pare-brises ou lunettes arrières, le facteur de transmission lumineuse globale sous illuminant A ($T_{LA}$) est supérieur ou égal à 70%.

Selon une autre variante de réalisation de l'invention et plus particulièrement pour des applications automobiles telles que des vitrages latéraux, le facteur de transmission lumineuse globale sous illuminant A ($T_{LA}$) est inférieur ou égal à 35%.

Selon une troisième variante de réalisation de l'invention et plus particulièrement pour des applications telles que des toits pour automobiles, le facteur de transmission lumineuse globale sous illuminant A ($T_{LA}$) est inférieur ou égal à 10%. Selon une variante, la teneur en Fe2O3 est avantageusement supérieure à 1,5 %.

Selon une réalisation préférée de l'invention, la composition de verre comprend les constituants ci-après dans les limites pondérales suivantes :

| | |
|---|---|
| $SiO_2$ | 68,5 - 74 % |
| CaO | 7 - 10 % |
| MgO | 0 - 5 % |
| $Al_2O_3$ | 0 - 1,5 % |
| $K_2O$ | 0 - 1 % |
| $Na_2O$ | 13 - 16 % |

De préférence encore, la composition de verre comprend les constituants ci-après dans les limites pondérales suivantes :

| | |
|---|---|
| $SiO_2$ | 70 - 73 % |
| CaO | 8 - 10 % |
| MgO | 0 - 4 % |
| $Al_2O_3$ | 0 - 1 % |
| $K_2O$ | 0 - 1 % |
| $Na_2O$ | 13 - 16 % |

La silice est maintenue dans les limites relativement étroites pour les raisons suivantes au-dessus d'environ 74%, la viscosité du verre et son aptitude à la dévitrification augmentent fortement ce qui rend beaucoup plus difficile sa fusion et sa coulée sur un bain d'étain ; au-dessous de 68,5%, la résistance hydrolytique du verre décroît très rapidement et la transmission dans le visible diminue également.

Cette diminution de la résistance hydrolytique du verre peut être compensée, au moins en partie, par l'introduction de $Al_2O_3$, mais cet oxyde contribue à l'augmentation de sa viscosité et à une diminution de la transmission dans le visible ; il ne peut donc être utilisé qu'en quantité très limitée.

Les oxydes alcalins $Na_2O$ et $K_2O$ permettent de faciliter la fusion du verre et d'ajuster sa viscosité aux températures élevées. $K_2O$ est avantageusement utilisée avec des teneurs inférieures à 1% ; l'augmentation du pourcentage de $K_2O$ ne peut se faire pour l'essentiel, qu'au détriment de $Na_2O$ ce qui peut contribuer à l'augmentation de la viscosité. La somme des teneurs pondérales de $Na_2O$ et $K_2O$ est, de préférence, supérieure à 15%.

Les oxydes alcalino-terreux introduits dans les verres selon l'invention ont pour effet globalement d'élever la viscosité aux températures élevées. La teneur en CaO ne doit pas excéder 10% pour maintenir la dévitrification des verres dans des limites acceptables.

Concernant l'oxyde MgO, selon un premier mode de réalisation de l'invention, sa teneur est avantageusement supérieure à 2%, notamment par souci économique.

Selon une autre réalisation, sa teneur est inférieure à 2% ; il a été mis en évidence que de telles teneurs en MgO caractérisent la composition selon l'invention par un déplacement du maximum de la bande d'absorption de FeO vers les grandes longueurs d'onde. La limitation du pourcentage de MgO à 2%, et de préférence sa suppression dans les verres de l'invention, en tant qu'ajout volontaire, permettent effectivement d'augmenter leur capacité d'absorption

**EP 0 936 196 B1**

dans l'infrarouge. La suppression totale de MgO, qui joue un rôle important sur la viscosité peut être compensée, au moins en partie, par une augmentation de la teneur en $Na_2O$ et/ou $SiO_2$.

BaO qui permet d'augmenter la transmission lumineuse, peut être ajouté dans les compositions selon l'invention dans des teneurs inférieures à 4%. En effet, BaO a une influence beaucoup plus faible que MgO et CaO sur la viscosité du verre. Dans le cadre de l'invention, l'augmentation de BaO se fait essentiellement au détriment des oxydes alcalins, de MgO et surtout de CaO. Toute augmentation importante de BaO contribue donc à augmenter la viscosité du verre, notamment aux basses températures. De surcroît, l'introduction d'un pourcentage élevé de BaO majore sensiblement le coût de la composition et a tendance à réduire la résistance hydrolytique du verre. Lorsque les verres de l'invention contiennent de l'oxyde de baryum, le pourcentage de cet oxyde est, de préférence, compris entre 0,5 et 3,5% en poids.

Outre le respect des limites définies précédemment pour la variation de la teneur de chaque oxyde alcalino-terreux, il est préférable pour obtenir les propriétés de transmission recherchées, de limiter la somme des pourcentages de MgO, CaO et BaO à une valeur égale ou inférieure à 12%.

Concernant l'oxyde $WO_3$, une teneur relativement élevée peut s'accompagner d'une coloration jaunâtre du verre. Selon une variante de l'invention, la composition de verre comprend en outre l'oxyde $CeO_2$ avec une teneur pondérale inférieure ou égale à 2,2%, et de préférence inférieure à 1,6%. De préférence encore, la composition de verre comprend l'oxyde $CeO_2$ dans les limites pondérales suivantes :

$$0,2 \leq CeO_2 \leq 1,5 \ \%$$

Cet oxyde permet effectivement en combinaison avec $WO_3$ d'obtenir les propriétés requises et d'éviter une coloration jaunâtre, lorsque les teneurs en $WO_3$ sont relativement élevées. Il est ainsi possible d'obtenir avantageusement une $T_{U\,V\,ISO} \leq 10\%$.

Selon une autre variante de l'invention, la composition de verre comprend l'oxyde $TiO_2$ avec une teneur pondérale inférieure ou égale à 1% et de préférence supérieure à 0,1%. L'oxyde $TiO_2$ peut être présent en combinaison avec l'oxyde $CeO_2$.

De même, dans une autre variante, la composition de verre comprend l'oxyde $La_2O_3$ avec une teneur pondérale inférieure ou égale à 2 %, celui-ci pouvant être présent en combinaison avec les oxydes $CeO_2$ et/ou $TiO_2$. Avantageusement, lorsqu'il est utilisé, l'oxyde de lanthane $La_2O_3$ est apporté par les matières premières porteuses de l'oxyde $CeO_2$.

Lorsque la volonté est de réaliser des verres colorés, les compositions de verre peuvent encore comprendre un ou plusieurs agents colorants tels que CoO, Se, $Cr_2O_3$, NiO, $V_2O_5$.

Les verres selon l'invention peuvent également contenir jusqu'à 1% d'autres constituants apportés par les impuretés des matières premières vitrifiables et/ou du fait de l'introduction de calcin dans le mélange vitrifiable et/ou provenant de l'utilisation d'agent d'affinage ($SO_3$, Cl, $Sb_2O_3$, $As_2O_3$).

Pour faciliter la fusion et notamment rendre celle-ci mécaniquement intéressante, la matrice présente avantageusement une température, correspondant à une viscosité $\eta$ telle que $\log\eta = 2$, inférieure à 1500°C. De préférence encore et notamment pour la réalisation du substrat à partir d'un ruban de verre obtenu selon la technique " float ", la matrice présente une température correspondant à la viscosité $\eta$, exprimée en poise, telle que $\log\eta = 3,5$, $T\log\eta = 3,5$ et une température de liquidus $T_{liq}$, satisfaisant la relation :

$$T(\log\eta = 3,5) - T_{liq} > 20°C,$$

et de préférence la relation :

$$T(\log\eta = 3,5) - T_{liq} > 50°C,$$

D'autres détails et caractéristiques avantageuses ressortiront ci-après de la description d'exemples de réalisation selon l'invention.

Plusieurs séries de verres ont été élaborées à partir des compositions figurant dans les tableaux qui suivent. Tous ces verres ont été élaborés dans des conditions d'oxydo-réduction sensiblement identiques ; leur rédox est compris entre 0,12 et 0,29.

Ce tableau indique également les valeurs des propriétés suivantes mesurées pour des épaisseurs de 4,85 mm ou 3,85 mm ou 3,15 mm ou 2,85 mm:

↪ le facteur de transmission lumineuse globale sous illuminant A ($T_{LA}$) entre 380 et 780 nm,

↪ le facteur de transmission énergétique globale $T_E$ intégrée entre 295 et 2500 nm selon la norme Parry Moon Masse 2,

↪ le facteur de transmission dans l'ultraviolet intégré entre 295 et 380 nm, $T_{U.V. ISO}$, selon la norme ISO 9050,

↪ la longueur d'onde dominante sous illuminant $D_{65}$.

Les tableaux font également apparaître les températures correspondant aux viscosités, exprimées en poise, telles que $\log\eta = 2$ et $\log\eta = 3,5$, Tlog2 et Tlog3,5 ainsi que la température de liquidus $T_{liq}$.

Le premier verre, intitulé R, est un verre de référence dont la composition est usuelle pour les vitrages destinés à l'automobile.

## TABLEAU 1

|  | R | 1 | 2 | 3 | 4 | 5 | 6 | 7 | 8 |
|---|---|---|---|---|---|---|---|---|---|
| $SiO_2$ | 71,6 | 72,62 | 72,63 | 72,63 | 72,86 | 72,75 | 72,57 | 72,5 | 71,70 |
| CaO | 8,6 | 8,63 | 8,63 | 8,63 | 8,68 | 8,66 | 8,64 | 8,64 | 8,63 |
| MgO | 3,7 | 0,30 | 0,30 | 0,30 | 0,30 | 0,30 | 0,30 | 0,30 | 0,30 |
| $Al_2O_3$ | 0,6 | 0,90 | 0,90 | 0,90 | 0,90 | 0,90 | 0,90 | 0,90 | 0,90 |
| $K_2O$ | 0,2 | 0,30 | 0,34 | 0,34 | 0,30 | 0,30 | 0,30 | 0,30 | 0,30 |
| $Na_2O$ | 14,2 | 15,29 | 15,29 | 15,29 | 15,37 | 15,35 | 15,31 | 15,30 | 15,30 |
| $SO_3$ | 0,2 | 0,30 | 0,30 | 0,30 | 0,30 | 0,30 | 0,30 | 0,30 | 0,30 |
| $Fe_2O_3$ | 0,86 | 1,21 | 1,21 | 1,23 | 1,12 | 1,14 | 1,13 | 1,2 | 1,12 |
| $WO_3$ | 0 | 0,45 | 0,40 | 0,45 | 0,10 | 0,25 | 0,5 | 1,2 | 0,45 |
| $CeO_2$ | 0 | 0 | 0 | 0 | 0 | 0 | 0 | 0 | 1,00 |
| rédox | 0,28 | 0,15 | 0,16 | 0,16 | 0,14 | 0,17 | 0,175 | 0,184 | 0,19 |
| $T_{LA}$ (%) 3,85mm | 71 | 70,5 | 71,5 | 70,3 | 72,3 | 70,8 | 69,7 | 66,6 | 70 |
| $T_E$ (%) 3,85 mm | 43,5 | 43,9 | 43,5 | 44,9 | 45,5 | 43,7 | 42,4 | 38,2 | 42,3 |
| $T_{UV ISO}$ (%) 3,85 mm | 18,5 | 11,6 | 12 | 11,3 | 14,7 | 13,3 | 12,6 | 11,4 | 8,0 |
| $\lambda d$ ($D_{65}$) nm | 502 | 553 | 555 | 557 | 541 | 537 | 545 | 537 | 550 |
| Tlog2 (°C) | 1436 | 1457 | 1457 | 1457 | 1457 | 1457 | 1457 | 1457 | 1457 |
| Tlog3,5 (°C) | 1101 | 1107 | 1107 | 1107 | 1107 | 1107 | 1107 | 1107 | 1107 |
| $T_{liq}$ (°C) | 1040 | 1002 | 1002 | 1002 | 1002 | 1002 | 1002 | 1002 | 1002 |

## TABLEAU 2

| | 9 | 10 | 11 | 12 | 13 | 14 |
|---|---|---|---|---|---|---|
| $SiO_2$ | 71,6 | 71,2 | 71,2 | 72,2 | 68,7 | 68,9 |
| CaO | 8,6 | 8,7 | 8,7 | 8,65 | 8,2 | 8,2 |
| MgO | 0,3 | 0,3 | 0,3 | 0,3 | 3,8 | 3,8 |
| $Al_2O_3$ | 0,9 | 0,9 | 0,9 | 0,9 | 0,6 | 0,6 |
| $Na_2O + K_2O$ | 15,5 | 15,7 | 15,7 | 15,6 | 15,13 | 14,9 |
| $Fe_2O_3$ | 0,77 | 0,82 | 1,3 | 1,3 | 0,75 | 0,75 |
| $WO_3$ | 0,95 | 1 | 0,35 | 0,3 | 0,5 | 0,6 |
| $CeO_2$ | 1 | 1 | 0,42 | 0,4 | 1,9 | 1,9 |
| rédox | 0,22 | 0,24 | 0,14 | 0,13 | 0,22 | 0,22 |
| $T_{LA}$ (%) 3,85 mm | 74,5 | 71,7 | 71,9 | 71,2 | 72,8 | 72,3 |
| $T_E$ (%) 3,85 mm | 47,8 | 43,5 | 46,5 | 45,5 | 47,8 | 46,9 |
| $T_{UV\,ISO}$ (%) 3,85 mm | 10 | 9,5 | 9,1 | 8,6 | 7,4 | 6,9 |
| $\lambda d$ ($D_{65}$) nm | 542 | 529 | 554 | 556 | 537 | 522 |

## TABLEAU 3

|  | 15 | 16 | 17 | 18 |
|---|---|---|---|---|
| $SiO_2$ | 71 | 71 | 71 | 71 |
| CaO + MgO | 8,7 | 8,7 | 8,7 | 8,7 |
| $Al_2O_3$ | 0,9 | 0,9 | 0,9 | 0,9 |
| $Na_2O + K_2O$ | 15,6 | 15,6 | 15,6 | 15,6 |
| $Fe_2O_3$ | 1,2 | 1,2 | 1,32 | 1,3 |
| $WO_3$ | 0,45 | 0,45 | 1 | 1 |
| $CeO_2$ | 0 | 0 | 0,4 | 0,4 |
| $La_2O_3$ | 1 | 3 | 0 | 1 |
| rédox | 0,18 | 0,18 | 0,18 | 0,18 |
| Epaisseur en mm | 3,35 | 3,47 | 3,48 | 3,58 |
| $T_{LA}$ (%) 3,85 mm | 71 | 71 | 71 | 71 |
| $T_E$ (%) 3,85 mm | 44 | 44,3 | 45,4 | 45,6 |
| $T_{UV\,ISO}$ (%) 3,85 mm | 13,4 | 12,4 | 8,2 | 7,4 |
| $\lambda d$ $(D_{65})$ nm | 537 | 542 | 558 | 560 |

### TABLEAU 4

|  | 19 | 20 | 21 | 22 | 23 |
|---|---|---|---|---|---|
| $SiO_2$ | 68,7 | 68,7 | 68,7 | 68,9 | 68,7 |
| CaO | 8,2 | 8,2 | 8,2 | 8,2 | 8,2 |
| MgO | 3,8 | 3,8 | 3,8 | 3,8 | 3,8 |
| $Al_2O_3$ | 0,6 | 0,6 | 0,6 | 0,6 | 0,6 |
| $Na_2O + K_2O$ | 15,13 | 15,13 | 15,13 | 14,9 | 15,13 |
| $Fe_2O_3$ | 0,63 | 0,73 | 0,72 | 0,73 | 0,73 |
| $WO_3$ | 0,5 | 0,5 | 0,5 | 0,6 | 0,6 |
| $CeO_2$ | 1,9 | 1,9 | 1,9 | 1,9 | 1,9 |
| rédox | 0,18 | 0,22 | 0,24 | 0,22 | 0,27 |
| $T_{LA}$ (%) 3,85 mm | 75,9 | 72,8 | 70,6 | 72,3 | 70 |
| $T_E$ (%) 3,85 mm | 53,5 | 47,8 | 44,2 | 46,9 | 42,6 |
| $T_{UV\ ISO}$ (%) 3,85 mm | 8 | 7,4 | 7 | 6,9 | 7 |
| $\lambda d\ (D_{65})$ nm | 547 | 537 | 522 | 536 | 517 |

## TABLEAU 5

|  | 24 | 25 | 26 | 27 | 28 |
|---|---|---|---|---|---|
| $SiO_2$ | 72,9 | 68,9 | 68,9 | 72 | 72 |
| CaO | 8,6 | 8,2 | 8,2 | 8,6 | 8,6 |
| MgO | 0 | 3,8 | 3,8 | 0 | 0 |
| $Al_2O_3$ | 0,75 | 0,6 | 0,6 | 0,75 | 0,75 |
| $Na_2O + K_2O$ | 15,36 | 14,9 | 14,9 | 15,5 | 15,5 |
| $Fe_2O_3$ | 1,3 | 0,73 | 0,73 | 0,83 | 0,83 |
| $WO_3$ | 0,4 | 0,6 | 0,6 | 0,4 | 0,4 |
| $CeO_2$ | 0,42 | 1,9 | 1,9 | 1,55 | 1,55 |
| rédox | 0,14 | 0,22 | 0,165 | 0,17 | 0,135 |
| $T_{LA}$ (%) 4,85 mm | 66,8 | * | 71,2 | 68,4 | 73,4 |
| $T_E$ (%) 4,85 mm | 39,0 | * | 46,4 | 38,5 | 47,1 |
| $T_{UV ISO}$ (%) 4,85 mm | 5,9 | * | 4,8 | 6,5 | 6,3 |
| $T_{LA}$ (%) 3,85 mm | 71,8 | 72,3 | 75 | 72,5 | 76,8 |
| $T_E$ (%) 3,85 mm | 45,1 | 46,9 | 52,5 | 44,3 | 52,9 |
| $T_{UV ISO}$ (%) 3,85 mm | 8,6 | 6,9 | 7 | 9,1 | 8,8 |
| λd ($D_{65}$) nm | 554 | 522 | 553 | 518 | 553 |
| $T_{LA}$ (%) 3,15 mm | 74,6 | 75,4 | 77,8 | 75,7 | 79,3 |
| $T_E$ (%) 3,15 mm | 50,4 | 52,1 | 57,6 | 49,2 | 57,7 |
| $T_{UV ISO}$ (%) 3,15 mm | 11,5 | 9,3 | 9,4 | 11,7 | 11,3 |
| $T_{LA}$ (%) 2,85 mm | 76,1 | 76,8 | 79,1 | 77,1 | 80,4 |
| $T_E$ (%) 2,85 mm | 52,9 | 54,6 | 59,9 | 51,7 | 60,0 |
| $T_{UV ISO}$ (%) 2,85 mm | 13,1 | 10,7 | 10,8 | 13,2 | 12,7 |

Dans le tableau 6, les valeurs de transmission sont calculées par modèle.

**TABLEAU 6**

| | 29 | 30 |
|---|---|---|
| $SiO_2$ | 73,30 | 73,75 |
| CaO | 7,70 | 7,70 |
| MgO | 0 | 0 |
| $Al_2O_3$ | 1,00 | 1,00 |
| $Na_2O + K_2O$ | 15,10 | 15,10 |
| $Fe_2O_3$ | 0,70 | 1,05 |
| $WO_3$ | 0,40 | 0,40 |
| $CeO_2$ | 1,80 | 1,00 |
| rédox | 0,2 | 0,15 |
| $T_{LA}$ (%) 3,85 mm | 75,7 | 73,3 |
| $T_E$ (%) 3,85 mm | 49,8 | 47,8 |
| $T_{UV\ ISO}$ (%) 3,85 mm | 8,5 | 8,5 |

## TABLEAU 7

|  | **31** | **32** | **33** | **34** |
|---|---|---|---|---|
| $SiO_2$ | 72 | 72 | 72,2 | 72,2 |
| $CaO$ | 8,6 | 8,6 | 8,6 | 8,6 |
| $MgO$ | 0 | 0 | 0 | 0 |
| $Al_2O_3$ | 0,75 | 0,75 | 0,9 | 0,9 |
| $Na_2O + K_2O$ | 15,5 | 15,5 | 15,55 | 15,55 |
| $Fe_2O_3$ | 0,83 | 0,83 | 1,1 | 1,1 |
| $WO_3$ | 0,40 | 0,20 | 0,25 | 0,2 |
| $TiO_2$ | 0 | 0,2 | 0,25 | 0,3 |
| $CeO_2$ | 1,55 | 1,55 | 0,8 | 0,8 |
| rédox | 0,135 | * | * | * |
| $T_{LA}$ (%) 3,85 mm | 73,4 | 73,4 | 70,4 | 71,2 |
| $T_E$ (%) 3,85 mm | 47,1 | 47,1 | 43,8 | 44,6 |
| $T_{UV\ ISO}$ (%) 3,85 mm | 6,3 | 6,6 | 6,2 | 6,0 |

" * " valeurs non mesurées

Tout d'abord, ces résultats mettent en évidence que ces compositions de verre peuvent être fondues selon des techniques classiques et sont compatibles avec les techniques habituelles de fabrication du verre plat.

Par ailleurs, les propriétés optiques sont satisfaisantes et plus particulièrement la transmission dans l'ultraviolet $T_{U\ V\ ISO}$ est inférieure à 15% voire à 13%, ce qui autorise la protection des tissus habillant l'habitacle et la peau des passagers.

**Revendications**

1.  Composition de verre de type silico-sodo-calcique présentant une transmission ultraviolette telle que $T_{U.V.\ ISO} <$ 15%, et de préférence $T_{U.V.\ ISO} \leq$ 13% pour une épaisseur de verre comprise entre 2,85 mm et 4,85 mm et comportant les oxydes ci-après dans les limites pondérales suivantes :

| | |
|---|---|
| $Fe_2O_3$ | 0,4 - 1,5% |
| $WO_3$ | 0,1 - 1,2 % |
| où $Fe_2O_3$ est le fer total. | |

2.  Composition de verre selon la revendication 1, *caractérisée en ce qu'elle* présente une transmission ultraviolette telle que $T_{U.V.\ ISO} <$ 10% pour une épaisseur de verre comprise entre 2,85 mm et 4,85 mm.

3.  Composition de verre selon la revendication 1 ou 2, *caractérisée en ce que* la transmission énergétique globale $T_E$ est inférieure à 50% et de préférence inférieure à 45% pour une épaisseur de 3,85 mm.

**4.** Composition de verre selon l'une des revendications 1 à 3, *caractérisée en ce que* le rédox, c'est-à-dire le rapport $FeO/Fe_2O_3$, est compris entre 0,12 et 0,29.

**5.** Composition de verre selon l'une des revendications 1 à 4, *caractérisée en ce que* le facteur de transmission lumineuse globale sous illuminant A ($T_{LA}$) est supérieur ou égal à 70%.

**6.** Composition de verre selon l'une des revendications 1 à 4, *caractérisée en ce que* le facteur de transmission lumineuse globale sous illuminant A ($T_{LA}$) est inférieur ou égal à 35%.

**7.** Composition de verre selon l'une des revendications 1 à 4, *caractérisée en ce que* le facteur de transmission lumineuse globale sous illuminant A ($T_{LA}$) est inférieur ou égal à 10%.

**8.** Composition de verre selon l'une des revendications précédentes, *caractérisée en ce qu'elle* comprend les constituants ci-après dans les limites pondérales suivantes :

| | |
|---|---|
| $SiO_2$ | 68,5 - 74 % |
| $CaO$ | 7 - 10 % |
| $MgO$ | 0 - 5 % |
| $Al_2O_3$ | 0 - 1,5 % |
| $K_2O$ | 0 - 1 % |
| $Na_2O$ | 13 - 16 % |

**9.** Composition de verre selon l'une des revendications précédentes, *caractérisée en ce que* la teneur en MgO est inférieure ou égale à 2%.

**10.** Composition de verre selon l'une des revendications précédentes, *caractérisée en ce qu'elle* comporte l'oxyde $CeO_2$ avec une teneur pondérale inférieure ou égale à 2,2%.

**11.** Composition de verre selon la revendication 10, *caractérisée en ce qu'elle* comporte l'oxyde $CeO_2$ dans les limites pondérales suivantes :

$$0,2 \leq CeO_2 \leq 1,5 \ \%$$

**12.** Composition de verre selon l'une des revendications précédentes, *caractérisée en ce qu'elle* comporte l'oxyde $TiO_2$ avec une teneur pondérale inférieure ou égale à 1%.

**13.** Composition de verre selon la revendication 12, *caractérisée en ce que* la teneur en oxyde $TiO_2$ est supérieure à 0,2%.

**14.** Composition de verre selon l'une des revendications précédentes, *caractérisée en ce qu'elle* comporte l'oxyde $La_2O_3$ avec une teneur pondérale inférieure ou égale à 2 %.

**15.** Composition de verre selon l'une des revendications précédentes, *caractérisée en ce qu'elle* comporte en outre au moins un agent colorant tel que CoO, Se, $Cr_2O_3$, NiO, $V_2O_5$.

**16.** Composition de verre selon l'une des revendications précédentes, *caractérisée en ce qu'elle* présente une différence entre la température correspondant à une viscosité $\eta$, exprimée en poise, telle que $\log\eta = 3,5$, et la température de liquidus $T_{liq}$, qui est supérieure à 20°C et de préférence supérieure à 50°C.

**17.** Composition de verre selon l'une des revendications précédentes, *caractérisée en ce qu'elle* présente une température correspondant à une viscosité $\eta$, exprimée en poise, telle que $\log\eta = 2$ qui est inférieure à 1500°C.

**Patentansprüche**

**1.** Kalk-Natron-Silicatglas-Zusammensetzung, die einen derartigen UV-Transmissionsgrad aufweist, dass bei einer Glasdicke von 2,85 bis 4,85 mm $T_{UV\,ISO}$ < 15 % und vorzugsweise $T_{UV\,ISO} \leq 13$ % ist, und folgende Oxide innerhalb nachstehender Gewichtsgrenzen enthält:

| $Fe_2O_3$ | 0,4 bis 1,5 % und |
|---|---|
| $WO_3$ | 0,1 bis 1,2 %, |
| wobei $Fe_2O_3$ Gesamteisen bedeutet. | |

2.  Glaszusammensetzung nach Anspruch 1, **dadurch gekennzeichnet, dass** sie bei einer Glasdicke von 2,85 bis 4,85 mm einen derartigen UV-Transmissionsgrad aufweist, dass $T_{UV\,ISO}$ < 10 % ist.

3.  Glaszusammensetzung nach Anspruch 1 oder 2, **dadurch gekennzeichnet, dass** bei einer Dicke von 3,85 mm der Strahlungstransmissionsgrad $T_E$ kleiner als 50 % und vorzugsweise kleiner als 45 % ist.

4.  Glaszusammensetzung nach einem der Ansprüche 1 bis 3, **dadurch gekennzeichnet, dass** der Redoxgrad, d. h. das Verhältnis von $FeO/Fe_2O_3$, 0,12 bis 0,29 beträgt.

5.  Glaszusammensetzung nach einem der Ansprüche 1 bis 4, **dadurch gekennzeichnet, dass** der globale Lichttransmissionsgrad für Normlichtart A ($T_{LA}$) größer oder gleich 70 % ist.

6.  Glaszusammensetzung nach einem der Ansprüche 1 bis 4, **dadurch gekennzeichnet, dass** der globale Lichttransmissionsgrad für Normlichtart A ($T_{LA}$) kleiner oder gleich 35 % ist.

7.  Glaszusammensetzung nach einem der Ansprüche 1 bis 4, **dadurch gekennzeichnet, dass** der globale Lichttransmissionsgrad für Normlichtart A ($T_{LA}$) kleiner oder gleich 10 % ist.

8.  Glaszusammensetzung nach einem der vorhergehenden Ansprüche, **dadurch gekennzeichnet, dass** sie folgende Bestandteile innerhalb nachstehender Gewichtsgrenzen umfasst:

| $SiO_2$ | 68,5 bis 74 %, |
|---|---|
| $CaO$ | 7 bis 10 %, |
| $MgO$ | 0 bis 5 %, |
| $Al_2O_3$ | 0 bis 1,5 %, |
| $K_2O$ | 0 bis 1 %, |
| $Na_2O$ | 13 bis 16 %. |

9.  Glaszusammensetzung nach einem der vorhergehenden Ansprüche, **dadurch gekennzeichnet, dass** der MgO-Gehalt kleiner oder gleich 2 % ist.

10. Glaszusammensetzung nach einem der vorhergehenden Ansprüche, **dadurch gekennzeichnet, dass** sie das Oxid $CeO_2$ mit einem Gewichtsgehalt von kleiner oder gleich 2,2 % enthält.

11. Glaszusammensetzung nach Anspruch 10, **dadurch gekennzeichnet, dass** sie das Oxid $CeO_2$ innerhalb der Gewichtsgrenzen

$$0,2 \leq CeO_2 \leq 1,5 \%$$

enthält.

12. Glaszusammensetzung nach einem der vorhergehenden Ansprüche, **dadurch gekennzeichnet, dass** sie das Oxid $TiO_2$ mit einem Gewichtsgehalt von kleiner oder gleich 1 % enthält.

13. Glaszusammensetzung nach Anspruch 12, **dadurch gekennzeichnet, dass** der Gehalt am Oxid $TiO_2$ mehr als 0,2 % beträgt.

**14.** Glaszusammensetzung nach einem der vorhergehenden Ansprüche, **dadurch gekennzeichnet, dass** sie das Oxid $La_2O_3$ mit einem Gewichtsgehalt von kleiner oder gleich 2 % enthält.

**15.** Glaszusammensetzung nach einem der vorhergehenden Ansprüche, **dadurch gekennzeichnet, dass** sie außerdem mindestens ein Farbmittel wie CoO, Se, $Cr_2O_3$, NiO und $V_2O_5$ enthält.

**16.** Glaszusammensetzung nach einem der vorhergehenden Ansprüche, **dadurch gekennzeichnet, dass** sie eine Differenz zwischen der Temperatur, die einer derartigen in Poise angegebenen Viskosität $\eta$, dass $\log\eta = 3{,}5$, entspricht, und der Liquidus-Temperatur $T_{liq}$ aufweist, die mehr als 20 °C und vorzugsweise mehr als 50 °C beträgt.

**17.** Glaszusammensetzung nach einem der vorhergehenden Ansprüche, **dadurch gekennzeichnet, dass** sie eine Temperatur aufweist, die einer derartigen in Poise angegebenen Viskosität $\eta$, dass $\log\eta = 2$, entspricht und weniger als 1 500 °C beträgt.

**Claims**

**1.** Glass composition of the soda-lime-silica type having an ultraviolet transmission such that $T_{U.V.ISO} < 15\%$ and preferably $T_{U.V.ISO} \leq 13\%$ for a glass thickness between 2.85 and 4.85 mm and incorporating the following oxides in the following weight limits:

| | |
|---|---|
| $Fe_2O_3$ | 0.4-1.5% |
| $WO_3$ | 0.1-1.2% |
| where $Fe_2O_3$ is the total iron. | |

**2.** Glass composition according to claim 1, **characterized in that** it has an ultraviolet transmission such that $T_{U.V.ISO} < 10\%$ for a glass thickness between 2.85 and 4.85 mm.

**3.** Glass composition according to claim 1 or 2, **characterized in that** the total energy transmission $T_E$ is below 50% and preferably below 45% for a thickness of 3.85 mm.

**4.** Glass composition according to one of the claims 1 to 3, **characterized in that** the redox, i.e. the $FeO/Fe_2O_3$ ratio, is between 0.12 and 0.29.

**5.** Glass composition according to one of the claims 1 to 4, **characterized in that** the total light transmission factor under illuminant A ($T_{LA}$) is equal to or above 70%.

**6.** Glass composition according to one of the claims 1 to 4, **characterized in that** the total light transmission factor under illuminant A ($T_{LA}$) is equal to or below 35%.

**7.** Glass composition according to one of the claims 1 to 4, **characterized in that** the total light transmission factor under illuminant A ($T_{LA}$) is equal to or below 10%.

**8.** Glass composition according to one of the preceding claims, **characterized in that** it comprises the following constituents in the following weight limits:

| | |
|---|---|
| $SiO_2$ | 68.5-74% |
| CaO | 7-10% |
| MgO | 0-5% |
| $Al_2O_3$ | 0-1.5% |
| $K_2O$ | 0-1% |
| $Na_2O$ | 13-16% |

**9.** Glass composition according to one of the preceding claims, **characterized in that** the MgO content is equal to or below 2%.

**10.** Glass composition according to one of the preceding claims, **characterized in that** it incorporates the oxide $CeO_2$ with a weight content equal to or below 2.2%.

**11.** Glass composition according to claim 10, **characterized in that** it incorporates the oxide CeO2 within the following weight limits:

$$0.2 \leq CeO_2 \leq 1.5\%$$

**12.** Glass composition according to one of the preceding claims, **characterized in that** it incorporates the oxide $TiO_2$ with a weight content equal to or below 1%.

**13.** Glass composition according to claim 12, **characterized in that** the content of the oxide $TiO_2$ is above 0.2%.

**14.** Glass composition according to one of the preceding claims, **characterized in that** it incorporates the oxide $La_2O_3$ with a weight content equal to or below 2%.

**15.** Glass composition according to one of the preceding claims, **characterized in that** it also incorporates at least one colouring agent such as CoO, Se, $Cr_2O_3$, NiO and $V_2O_5$.

**16.** Glass composition according to one of the preceding claims, **characterized in that** it has a difference between the temperature corresponding to a viscosity $\eta$, expressed in poise, such that $\log\eta = 3.5$ and the liquidus temperature $T_{liq}$, which is above 20°C and preferably above 50°C.

**17.** Glass composition according to one of the preceding claims, **characterized in that** it has a temperature corresponding to a viscosity $\eta$, expressed in poise, such that $\log\eta = 2$, which is below 1500°C.